# DEMANDE DE BREVET EUROPEEN

(11) **EP 4 151 841 A1**
(43) Date de publication de la demande: **22.03.2023**
(21) Numéro de dépôt: 22196835.7
(22) Date de dépôt: 21.09.2022
(51) Int. Cl.: F02B 75/28, F01B 7/14, F02B 63/04, F02B 67/04, H02K 16/00, F02B 67/06

(54) **GROUPE ÉLECTROGÈNE AVEC MOTEUR À PISTONS OPPOSÉS**

(30) Priorité: 21.09.2021 FR 2109897
(71) Demandeur: Bidois, Jean-Claude, 51800 Sainte Menehould (FR)
(72) Inventeur: Bidois, Jean-Claude, 51800 Sainte Menehould (FR)
(74) Mandataire: Brungard, Yves Francois

(57) **Abrégé**

Un groupe électrogène comporte un moteur (1) à pistons opposés, un générateur (2) entraîné par le moteur (1) pour fournir de l'électricité, le moteur (1) comportant un premier vilebrequin (11) et un deuxième vilebrequin (12) parallèles entre eux et un premier dispositif de transmission (3) reliant les deux vilebrequins pour les synchroniser. Le générateur (2) est du type avec un stator (21) et un rotor (20) contrarotatifs, un premier des éléments parmi le stator (21) et le rotor (20) étant entraîné par le premier dispositif de transmission (3), et en ce que le groupe électrogène comporte un deuxième dispositif de transmission (4) relié au moins au premier vilebrequin (11) pour entraîner un deuxième des éléments parmi le stator (21) et le rotor (20).

## Description

### Domaine technique

L'invention concerne un groupe électrogène comportant un moteur à pistons opposés et entraînant un générateur électrique.

### Technique antérieure

Un moteur à pistons opposés du type comportant au moins un cylindre dans lequel deux pistons sont montés coulissants et délimitant entre eux une chambre de combustion. Chaque piston est relié par une bielle à son propre vilebrequin. Dans une version de moteur à deux temps, les pistons ouvrent et ferment des lumières dans le cylindre au point mort bas, de manière d'une part à admettre de l air de combustion et d'autre part à permettre l'échappement des gaz de combustion. Dans la disposition la plus courante, le premier piston sert à contrôler l'admission de l'air frais tandis que le deuxième piston sert à contrôler l'échappement des gaz brûlés. Dans tous les cas, l'ouverture de l'échappement est réalisée avant celle de l'admission par des dispositions non détaillées ici. L'allumage de la combustion peut être de tout type que ce soit un allumage commandé, une auto-inflammation ou une injection directe.

Le document CN105240120A montre un groupe électrogène de ce type dans lequel un générateur est entraîné par le moteur à pistons opposés. Les deux vilebrequins sont synchronisés par un système de transmission à chaîne. Le premier vilebrequin entraîne également un compresseur pour compresser l'air de combustion et réaliser une suralimentation. L'autre vilebrequin entraîne le générateur par l'intermédiaire d'un renvoi d'angle à pignons coniques. L'axe de rotation du générateur est placé parallèlement à l'axe du cylindre afin d'optimiser l'encombrement de l'ensemble.

### Exposé de l'invention

L'invention vise à fournir un groupe électrogène avec moteur à pistons opposés optimisant les composants.

Avec cet objectif en vue, l'invention a pour objet un groupe électrogène comportant un moteur à pistons opposés, un générateur entraîné par le moteur pour fournir de l'électricité, le moteur comportant un premier vilebrequin et un deuxième vilebrequin parallèles entre eux et un premier dispositif de transmission reliant les deux vilebrequins pour les synchroniser, caractérisé en ce que le générateur est du type avec un stator et un rotor contrarotatifs, un premier des éléments parmi le stator et le rotor étant entraîné par le premier dispositif de transmission, et en ce que le groupe électrogène comporte un deuxième dispositif de transmission relié au moins au premier vilebrequin pour entraîner un deuxième des éléments parmi le stator et le rotor.

En faisant tourner le stator et le rotor du générateur en sens contraire, on optimise l'efficacité du générateur en permettant pour une même vitesse de rotation définie d'obtenir une puissance plus importante, due à la vitesse relative des éléments du générateur plus élevée. Autrement dit, pour une puissance fixée, on peut installer un générateur plus compact. Allié à la compacité du moteur à pistons opposés et à son efficacité, on obtient un groupe électrogène particulièrement performant sur le plan du rapport poids/puissance et de la consommation. Un tel groupe électrogène peut être utilisé pour fournir de l'électricité sur un chantier mobile, ou être embarqué dans un véhicule hybride pour fournir l'énergie d'entraînement de celui-ci au moins en partie. Les dispositifs de transmission peuvent être de toutes techniques, comme des engrenages, des chaînes, des courroies montées sur des poulies, ou une combinaison de ceux-ci. On entend par générateur tout type de machine électrique tournante permettant de générer du courant électrique continu ou alternatif. On entend par stator et rotor les deux éléments de la machine tournante dont la rotation relative permet de générer le courant électrique.

Selon une disposition constructive, le premier dispositif de transmission comporte une pluralité d'engrenages logés dans un premier carter. On peut ainsi relier les deux vilebrequins par une série d'engrenages, ceux-ci étant protégés par le premier carter. Le premier carter peut être étanche et contenir de l'huile afin de lubrifier les engrenages.

Selon une disposition constructive, le deuxième dispositif de transmission comporte une pluralité d'engrenages logés dans un deuxième carter. On retrouve les mêmes avantages que pour le premier dispositif de transmission.

De manière alternative, le premier dispositif de transmission comporte une chaîne en prise avec deux pignons. Ce dispositif de transmission permettant de garantir également la synchronisation entre les deux vilebrequins du moteur.

Selon une disposition constructive, le stator et le rotor sont entraînés par l'un des engrenages respectif du premier et du deuxième dispositif de transmission. Par exemple le rotor est entraîné par un engrenage du premier dispositif de transmission tandis que le stator est entraîné en rotation par un engrenage du deuxième dispositif de transmission. Les rôles du rotor et du stator peuvent aussi être inversés. Par cette disposition, on met à profit un engrenage du premier dispositif de transmission pour réaliser l'entraînement de l'un des éléments.

Selon une disposition constructive, la différence du nombre d'engrenages reliant respectivement le rotor et le stator au premier vilebrequin est un nombre impair. On garantit de cette manière que les rotations respectives du rotor et du stator sont inversées.

Selon un perfectionnement, le groupe électrogène comporte une pièce de support supportant un palier sur lequel le rotor et le stator sont montés rotatifs à l'extrémité opposée aux engrenages. On assure ainsi la sécurité de la rotation des éléments du générateur avec un guidage aux extrémités de ceux-ci.

Selon une disposition constructive, le moteur comporte une platine s'étendant perpendiculairement aux axes des vilebrequins et supportant le premier et le deuxième dispositif de transmission. Cette platine permet de créer par exemple un volume fermé avec le premier carter pour loger les éléments tels que les engrenages du premier dispositif de transmission.

Selon une disposition constructive, la pièce de support est fixée sur la platine.

Dans une configuration, la pièce de support est une potence. On optimise ainsi l'encombrement de la pièce de support.

Dans une autre configuration, la pièce de support est une arche. Cette configuration est plus rigide qu'une potence.

Selon un perfectionnement, l'arche est réalisée par l'assemblage de deux potences, réunies au niveau du palier. Les deux potences peuvent être symétriques et toutes deux solidaires de la platine. Cette configuration renforce la rigidité de l'ensemble.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en coupe d'un moteur à pistons opposés pour un groupe électrogène conforme à un mode de réalisation de l'invention ;
- la figure 2 est une vue schématique de dispositifs de transmission entraînant un générateur, dans un plan parallèle à celui de la figure 1 ;
- la figure 3 est une vue en coupe selon la ligne III-III de la figure 2 ;
- la figure 4 est une vue similaire à la figure 3 d'un deuxième mode de réalisation de l'invention ;
- la figure 5 est une vue similaire à la figure 3 d'un troisième mode de réalisation de l'invention.

### Description détaillée

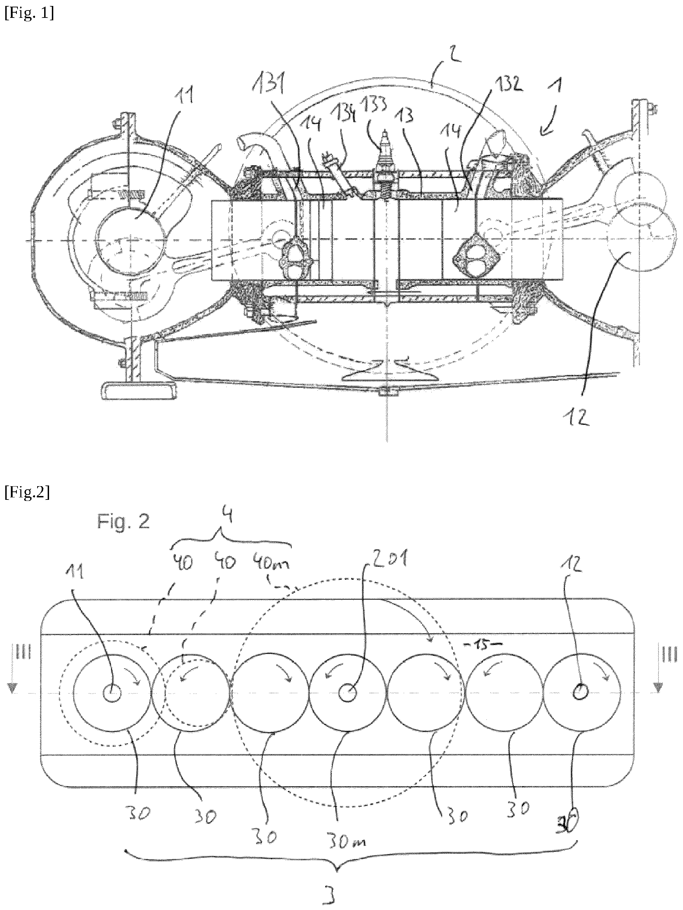

Un premier mode de réalisation de l'invention est montré sur les figures 1 et 2. Le groupe électrogène comporte un moteur 1 à pistons opposés, tel que montré en coupe sur la figure 1. Le groupe électrogène comporte en outre un générateur 2, montré en coupe sur la figure 2, entraîné par le moteur 1 pour fournir de l'électricité. Le moteur 1 comporte un premier vilebrequin 11 et un deuxième vilebrequin 12 parallèles entre eux. Le moteur 1 comporte une chemise 13 définissant à l'intérieur de l'espace cylindrique une chambre de combustion. Chaque vilebrequin 11, 12 est relié à un piston 14 par l'intermédiaire d'une bielle, chaque piston 14 étant coulissant dans la chemise 13 de part et d'autre de la chambre de combustion. Du côté du premier vilebrequin 11, la chemise 13 comporte trois lumières d'admission 131 qui la traversent et qui sont reliées à une tubulure d'admission. Du côté du deuxième vilebrequin 12 la chemise 13 comporte trois lumières d'échappement 132 qui la traversent et qui sont reliées à une tubulure d'échappement. Les tubulures d'admission et d'échappement sont inclinées et tangentielles par rapport à la paroi de la chemise 13. Dans la partie centrale de la chemise 13, la chemise comporte en outre une bougie de préchauffage 133 et au moins un injecteur 134 pour injecter du carburant. Ainsi le moteur 1 représenté est du type Diesel à deux temps. Le moteur 1 comporte de manière avantageuse un dispositif de suralimentation, non représenté, pour comprimer l'air d'admission.

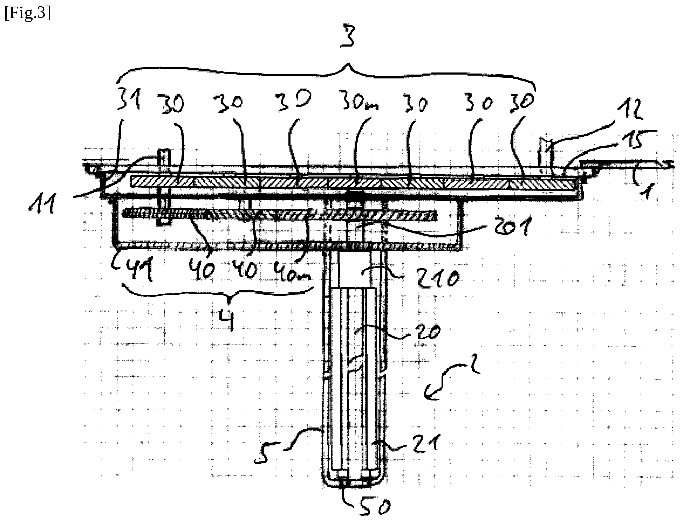

Le groupe électrogène comporte en outre un premier dispositif de transmission 3 reliant les deux vilebrequins 11, 12 pour les synchroniser. Le premier dispositif de transmission 3 comporte une pluralité d'engrenages 30 logés dans un premier carter 31 fixé sur une platine 15 du moteur 1, à savoir sept engrenages 30 dans l'exemple représenté sur les figures 2 et 3. L'engrenage 30m du milieu est monté sur un arbre 201 entraînant le rotor 20 du générateur 2.

Le générateur 2 est du type avec un stator 21 et un rotor 20 contrarotatifs, le rotor 20 étant entraîné par le premier dispositif de transmission 3 et un deuxième dispositif de transmission 4 relié au premier vilebrequin 11 pour entraîner le stator 21. Le deuxième dispositif de transmission 4 comporte une pluralité d'engrenages 40 logés dans un deuxième carter 41 fixé sur le premier carter 31. Le nombre d'engrenages 30, 40 est choisi de telle sorte que les rotations du stator 21 et du rotor 20 sont inversées. Autrement dit, le nombre d'engrenages 30 reliant le rotor 20 au premier vilebrequin 11 est d'une parité distincte de celle du nombre d'engrenages 40 reliant le stator 21 au premier vilebrequin 11. L'un est pair et l'autre est impair. Encore autrement dit, la différence du nombre d'engrenages 30, 40 reliant respectivement le rotor 20 et le stator 21 au premier vilebrequin 11 est un nombre impair. Le stator 21 est entraîné en rotation par l'intermédiaire d'un manchon 210 monté rotatif sur l'arbre de rotor 20 et lié au dernier engrenage 40m du deuxième dispositif de transmission 4.

Le groupe électrogène comporte en outre une pièce de support 5 supportant un palier 50 sur lequel le rotor 20 et le stator 21 sont montés rotatifs à l'extrémité opposée aux engrenages. La pièce de support 5 est fixée sur la platine 15. Dans le mode de réalisation qui est représenté, la pièce de support 5 est une arche en deux parties. Mais la pièce de support 5 pourrait être une potence seule. Le générateur 2 peut intégrer une roue de ventilation, non représentée, montée sur le rotor ou le stator pour générer un flux d'air et refroidir ainsi le générateur 2.

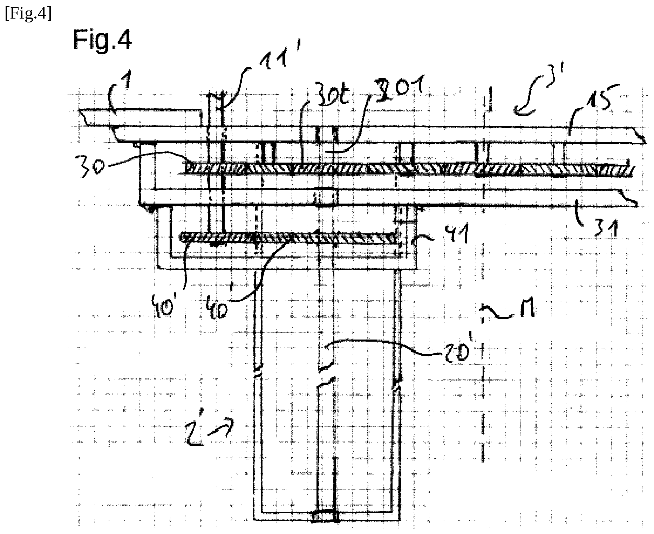

Dans un deuxième mode de réalisation du groupe électrogène, représenté sur la figure 4, l'axe du générateur 2' n'est pas dans le plan milieu M du moteur 1 comme dans le premier mode de réalisation, mais il est décalé du côté du premier vilebrequin 11', ce qui permet de réduire à deux le nombre d'engrenages 40' du deuxième dispositif de transmission 4, tandis que le rotor 20' est couplé au troisième engrenage 30t du premier dispositif de transmission 3'.

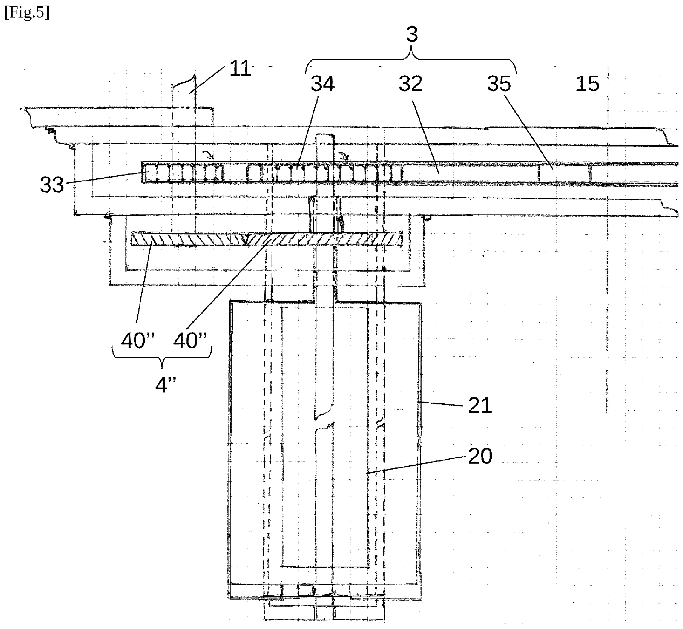

Dans un troisième mode de réalisation du groupe électrogène, représenté sur la figure 5, le premier dispositif de transmission 3" comporte une chaîne 32 en prise avec deux pignons 33 montés respectivement sur le premier et le deuxième vilebrequin 11, 12. Un troisième pignon 34 est monté sur le rotor 20 du générateur et est également en prise avec la chaîne 32, de manière à entraîner le rotor 20 en rotation dans le même sens que le premier vilebrequin 11. Un galet tendeur 35 est prévu pour maintenir la chaîne 32 tendue et garantir un secteur d'enroulement sur le troisième pignon 34. Le galet tendeur 35 peut être actionné par un ressort ou par un actionneur hydraulique. Le deuxième dispositif de transmission 4" comporte deux engrenages 40" afin d'inverser le mouvement de rotation du stator 21 par rapport au premier vilebrequin 11.

## Revendications

1. Groupe électrogène comportant un moteur (1) à pistons opposés, un générateur (2) entraîné par le moteur (1) pour fournir de l'électricité, le moteur (1) comportant un premier vilebrequin (11) et un deuxième vilebrequin (12) parallèles entre eux et un premier dispositif de transmission (3) reliant les deux vilebrequins pour les synchroniser, **caractérisé en ce que** le générateur (2) est du type avec un stator (21) et un rotor (20) contrarotatifs, un premier des éléments parmi le stator (21) et le rotor (20) étant entraîné par le premier dispositif de transmission (3), et **en ce que** le groupe électrogène comporte un deuxième dispositif de transmission (4) relié au moins au premier vilebrequin (11) pour entraîner un deuxième des éléments parmi le stator (21) et le rotor (20).

2. Groupe électrogène selon la revendication 1, dans lequel le premier dispositif de transmission (3) comporte une pluralité d'engrenages (30) logés dans un premier carter (31).

3. Groupe électrogène selon la revendication 1 ou 2, dans lequel le deuxième dispositif de transmission (4) comporte une pluralité d'engrenages (40) logés dans un deuxième carter (41).

4. Groupe électrogène selon la revendication 1, dans lequel le premier dispositif de transmission (3) comporte une chaîne (32) en prise avec deux pignons (33).

5. Groupe électrogène selon les revendications 2 et 3 prises en combinaison, dans lequel le stator (21) et le rotor (20) sont entraînés par l'un des engrenages (30m, 40m) respectif du premier et du deuxième dispositif de transmission (3, 4).

6. Groupe électrogène selon la revendication 5, dans lequel la différence du nombre d'engrenages (30, 40) reliant respectivement le rotor (20) et le stator (21) au premier vilebrequin (11) est un nombre impair.

7. Groupe électrogène selon l'une des revendications précédentes, **caractérisé en ce qu'**elle comporte une pièce de support (5) supportant un palier (51) sur lequel le rotor (20) et le stator (21) sont montés rotatifs à l'extrémité opposée aux engrenages (30m, 40m).

8. Groupe électrogène selon l'une des revendications précédentes, dans lequel le moteur comporte une platine s'étendant perpendiculairement aux axes des vilebrequins et supportant le premier et le deuxième dispositif de transmission.

9. Groupe électrogène selon les revendications 7 et 8 en combinaison, dans lequel la pièce de support (5) est fixée sur la platine (15).

10. Groupe électrogène selon la revendication 7 ou 9, dans laquelle la pièce de support (5) est une potence ou une arche.

11. Groupe électrogène selon la revendication 10, dans laquelle la pièce de support (5) est une arche en deux parties, réunies au niveau du palier (50).
